# EUROPÄISCHE PATENTSCHRIFT

(11) **EP 2 162 946 B1**
(45) Veröffentlichungstag und Bekanntmachung des Hinweises auf die Patenterteilung: **17.07.2013**
(21) Anmeldenummer: 08750026.0
(22) Anmeldetag: 05.05.2008
(51) Int. Cl.: H01M 10/48, G01K 1/14, G01K 7/04

(54) **MESSANORDNUNG ZUR MESSUNG EINER TEMPERATUR EINER WIEDERAUFLADBAREN ENERGIEVERSORGUNGSEINRICHTUNG**
MEASUREMENT ARRANGEMENT FOR MEASURING A TEMPERATURE OF A RECHARGEABLE POWER SUPPLY DEVICE
SYSTÈME DE MESURE DE LA TEMPÉRATURE D'UN DISPOSITIF RECHARGEABLE D'ALIMENTATION EN ÉNERGIE

(30) Priorität: 27.06.2007 DE 102007029745; 16.11.2007 DE 102007054811
(43) Veröffentlichungstag der Anmeldung: 17.03.2010
(73) Patentinhaber: Robert Bosch GmbH, 70442 Stuttgart (DE)
(72) Erfinder: KATZENBERGER, Steffen, 75378 Bad Liebenzell (DE); MATTHIAS, Wolf, 70469 Stuttgart (DE)
(86) Internationale Anmeldenummer: PCT/EP2008/055464
(87) Internationale Veröffentlichungsnummer: WO 2009/000587

(56) Entgegenhaltungen:
- EP-A- 1 780 825
- FR-A- 2 770 035
- JP-A- 2000 012 107

## Beschreibung

### Stand der Technik

Die Erfindung betrifft eine Messanordnung zur Messung einer Temperatur einer wiederaufladbaren Energieversorgungseinrichtung, wie beispielsweise einem Akkupack bzw. Batteriepack.

Aus dem Stand der Technik sind allgemein Akkupacks für Elektrowerkzeuge bekannt bei denen Thermosensoren eingesetzt werden, um die Temperatur des Akkupacks zu überwachen. Dabei werden vorzugsweise sog. temperaturabhängige Widerstände wie beispielsweise NTCs (Negative Temperature Coefficient) oder PTCs (Positive Temperature Coefficient) als Thermosensoren verwendet. Insbesondere zum Laden mit hohen Strömen beim Schnellladen aber auch bei Li-Ion Akkupacks wird aus Sicherheitsgründen während der Stromentnahme eine möglichst verzögerungsarme und genaue Temperaturerfassung der Akkuzellen durchgeführt. Dabei kann beispielsweise ein NTC Widerstandmittels eines wärmeleitfähigen Klebebandes an einer einzelnen Zelle befestigt werden, die zuvor von der Papierisolation befreit wurde. Weiterhin können die Zellen des Akkupacks auch über einen Kühlkörper gekühlt werden

Aus der DE 102 14 366 A1 ist ein Akkupack bekannt, bei dem ein Temperatursensor mit einem Kühlkörper des Akkupacks verbunden wird. Dabei kann der Temperatursensor direkt den Kühlkörper berühren und sogar in diesem eingekapselt sein oder es kann beispielsweise ein Wärmeleiterelement zwischen dem Thermosensor und dem Kühlkörper angeordnet werden.

Des Weiteren ist aus der DE 102 14 368 A1 eine Messanordnung bekannt zur Messung der Temperatur einer Akku-Zelle. Dabei ist ein Temperatursensor in Form eines NTC-Widerstands vorgesehen, der zwei Leiterbeine aufweist, die durch entsprechende Lötaugen einer Platine hindurch gesteckt und mit dieser verlötet werden. Die thermische Verbindung des Temperatursensors mit einer Akku-Zelle erfolgt über ein Wärmeleitelement beispielsweise aus einem wärmeleitfähigen Gummi.

Aus FR 2 770 035 A ist eine Messanordnung zur Messung einer Temperatur eines Batteriepacks bekannt. Dazu ist ein Sensor vorgesehen, der einen Wärmeleiter aufweist, der zwischen zwei Gehäusehälften eingefügt ist.

Gemäß der vorliegenden Erfindung, wie in Anspruch 1 beansprucht, wird nun eine Messanordnung zur Messung einer Temperatur einer Energieversorgungseinrichtung für ein Elektrogerät bereitgestellt. Die Energieversorgungseinrichtung weist dabei wenigstens ein zu messendes Objekt auf an dem das Thermosensorelement vorgesehen wird. Hierzu wird das Thermosensorelement im Gegensatz zum Stand der Technik auf einer Flachleitung befestigt und das Ganze in einen Spalt zwischen dem Messobjekt und einer äußeren Umhüllung angeordnet. Dies hat den Vorteil, dass durch die Befestigung des Thermosensorelements an der Flachleitung und das Einschieben des Ganzen zwischen das Messobjekt und dessen Umhüllung eine sehr einfach und preiswerte Montage erzielt werden kann. Des Weiteren kann ein guter Wärmeübergang gewährleistet werden, da ein direkter mechanischer Kontakt zwischen dem Thermoelement und dem Messobjekt hergestellt werden kann.

In einer weiteren Ausführungsform weist die Messanordnung wenigstens zwei Thermosensorelemente auf, die an verschiedenen Positionen an dem Messobjekt (30) angeordnet sind, beispielsweise an gegenüberliegenden Stellen und/oder auf verschiedenen Höhen.

In der erfindungsgemäßen Ausführungsform ist das Thermosensorelement ein NTC-Widerstand oder ein PTC-Widerstand. Der NTC-Widerstand hat beispielsweise den Vorteil, dass eine schnelle Reaktionszeit gewährleistet werden kann, da der Widerstand als Thermosensorelement eine geringe eigene Reaktionszeit aufweist.

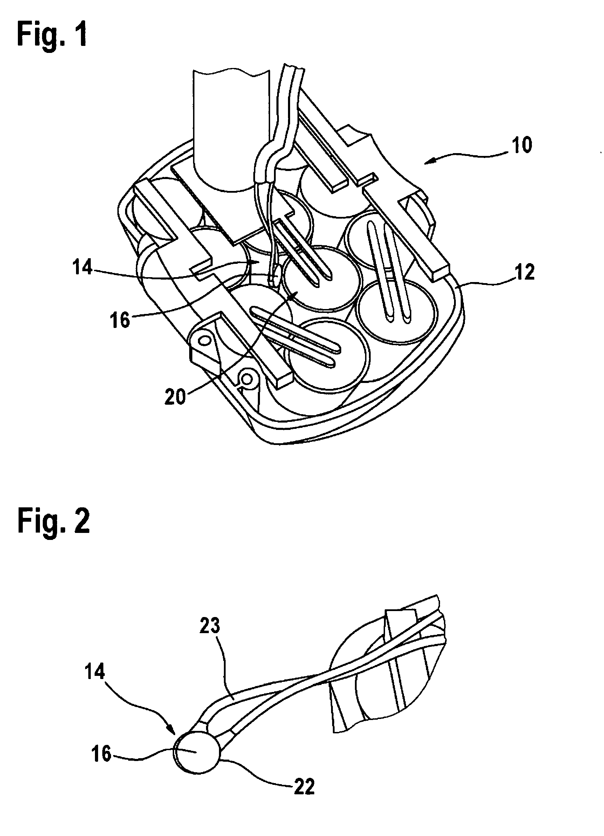

In der erfindungsgemäßen Ausführungsform ist der NTC-Widerstand bzw. der PTC-Widerstand ohne Gehäuse auf der Flachleitung vorgesehen ist. Dies hat den Vorteil, dass eine sehr viel flachere Bauweise erzielt werden kann als bei den herkömmlichen bedrahteten NTC-Widerständen, wie sie im nachfolgenden noch mit Bezug auf Fig. 1 erläutert werden.

Gemäß einer weiteren erfindungsgemäßen Ausführungsform ist die wiederaufladbare Energieversorgungseinrichtung ein Akkupack oder ein Batteriepack. Das Messobjekt ist hierbei eine Akkuzelle bzw. ein Batterieelement. Hierbei wird das Thermosensorelement zwischen die jeweilige Akkuzelle bzw. Batterieelement und dessen Umhüllung geschoben, was eine sehr einfache Befestigung des Thermosensorelements erlaubt. Grundsätzlich kann dabei nicht nur ein sondern auch wenigstens zwei oder mehr Thermosensorelemente an dem jeweiligen Messobjekt angeordnet werden, um beispielsweise das Auftreten von Messschwankungen auszugleichen. Die Umhüllung der Akkuzelle ist dabei häufig aus Papier. Diese muss hierbei nicht entfernt werden, wie dies beim Stand der Technik der Fall ist, sondern kann zur Befestigung des Thermosensorelements genutzt werden.

Ausführungsbeispiele der Erfindung sind nachstehend anhand der schematischen Figur der Zeichnung näher erläutert. Es zeigt:
- Figur 1: Befestigung eines NTC-Widerstands bei einem Akkupack gemäß dem Stand der Technik,
- Figur 2: eine Ansicht eines handelsüblichen bedrahteten NTC-Widerstands,
- Figur 3: einen handelsüblichen NTC-Widerstand der ohne Gehäuse auf einer Flachleitung montiert ist,
- Figur 4: die Montage einer erfindungsgemäßen Messanordnung bei einem Akkupack, und
- Figur 5: eine erfindungsgemäße Akku-Zelle in montiertem Zustand.

Fig. 1 zeigt als wiederaufladbare Energieversorgungseinrichtung 10 zunächst einen gewöhnlichen Akkupack 12. Gemäß Stand der Technik ist als Thermosensorelement 14 ein normaler NTC-Widerstand 16 mittels eines Klebebandes (nicht dargestellt) an eine Akkuzelle 20 des Akkupacks 12 angeklebt.

In Fig. 2 ist ein handelsüblicher bedrahteter NTC-Widerstand 16 gezeigt, wie er im Stand der Technik als Thermosensorelement 14 verwendet wird. Der NTC-Widerstand 16 weist dabei ein Gehäuse 22 und ummantelte Drähte 23 auf.

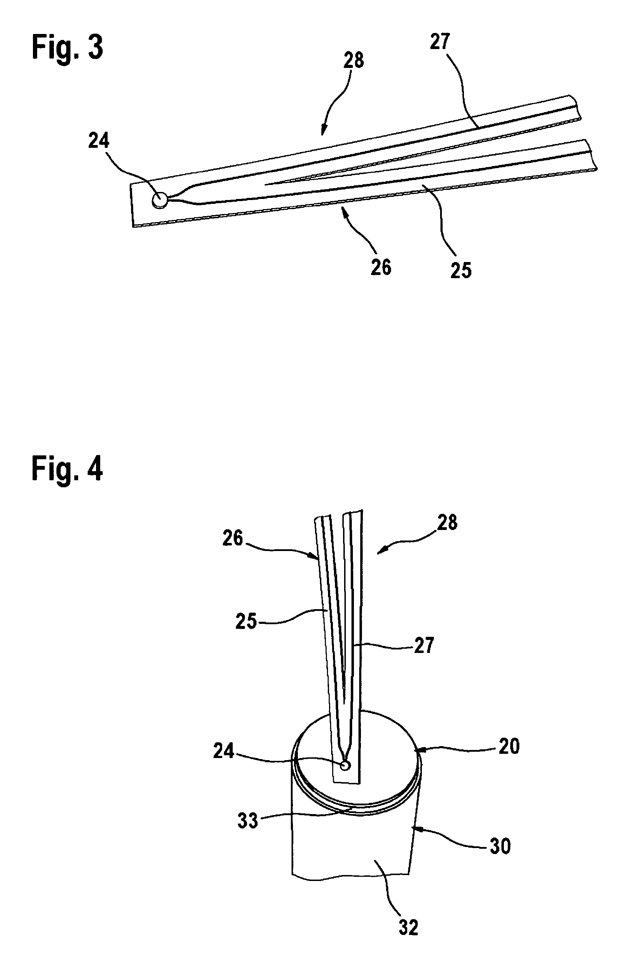

Im Gegensatz dazu zeigt Fig. 3 einen NTC-Widerstand 24 der gemäß der Erfindung ohne Gehäuse auf einer Flachleitung 26, bestehend aus Drähten 27 und einem folienartigen Trägermaterial 25, montiert ist, um ein Thermosensorelement 28 zu bilden. Dies hat den Vorteil, wie man bei einem Vergleich der Fig. 2 und 3 deutlich erkennt, dass die Bauweise des Thermosensorelements 28 in Fig. 3 deutlich flacher ist als die des Thermosensorelements 14 in Fig. 2, da das Gehäuse weggelassen wird und die Drähte 27 auf einem folienartigen Trägermaterial 25 aufgebracht sind.

Die Montage dieses Thermosensorelements 28 an einer Akkuzelle 20 als Messobjekt 30 ist in Fig. 4 gezeigt. Dabei wird der Flachleiter 26 mit dem daran befestigten NTC-Widerstand 24 zwischen die Akkuzelle 20 und deren Umhüllung 32 geschoben bzw. in den Spalt 33 dazwischen. Die Umhüllung 32 einer Akkuzelle 20 besteht dabei beispielsweise aus Papier, wobei jedoch auch jedes andere Material denkbar ist, das geeignet ist eine solche Akkuzelle 20 zu umhüllen.

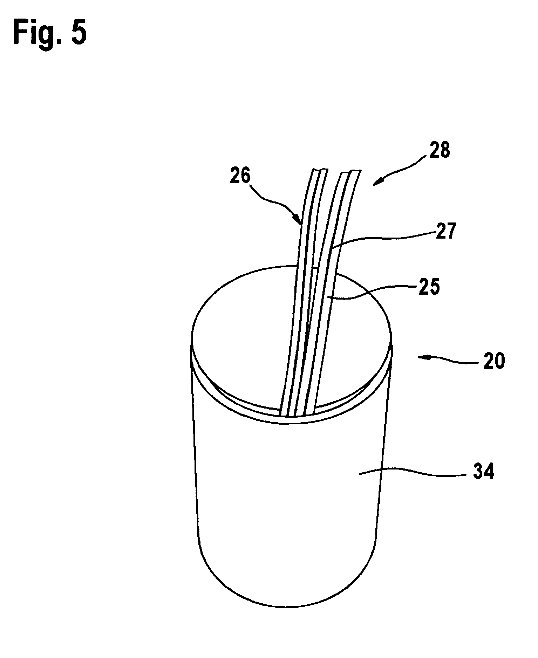

In Fig. 5 ist die fertige Akkuzelle 20 einer erfindungsgemäßen Messanordnung 34 dargestellt, wobei das Thermosensorelement 28 an dieser montiert ist. Grundsätzlich ist die Erfindung dabei nicht auf NTC-Widerstände 24 beschränkt, um ein Thermosensorelement 28 zu bilden. Es kann beispielsweise auch eine PTC-Widerstand verwendet werden oder ein anderes flach bauendes Thermosensorelement, dass beispielsweise ebenfalls mit einem Flachleiter verbunden werden kann. Dabei ist es auch denkbar nicht nur ein Thermosensorelement 28 an der Akkuzelle 20 zu befestigen, sondern es ist auch möglich wenigstens zwei Thermosensorelemente 20 an verschiedenen Positionen der Akkuzelle 20 anzuordnen, um Messschwankungen oder - Ungenauigkeiten auszugleichen.

## Patentansprüche

1. Messanordnung (34) zur Messung einer Temperatur einer wiederaufladbaren Energieversorgungseinrichtung (10) für ein Elektrogerät, wobei die Energieversorgungseinrichtung (10) wenigstens ein Messobjekt (30) aufweist, **dadurch gekennzeichnet, dass** wenigstens ein als NTC-Widerstand (24) oder PTC-Widerstand ausgebildetes Thermosensorelement (28) ohne Gehäuse auf einer Flachleitung (26) vorgesehen ist und in einen Spalt (33) zwischen dem Messobjekt (30) und einer äußeren Umhüllung (32) angeordnet ist.

2. Messanordnung nach Anspruch 1, **dadurch gekennzeichnet, dass** wenigstens zwei Thermosensorelemente (28) an gegenüberliegenden Stellen und/oder auf verschiedenen Höhen an dem Messobjekt (30) angeordnet sind.

3. Messanordnung nach wenigstens einem der Ansprüche 1 bis 2, **dadurch gekennzeichnet, dass** die wiederaufladbare Energieversorgungseinrichtung (10) ein Akkupack (12) bzw. Batteriepack ist.

4. Messanordnung nach wenigstens einem der Ansprüche 1 bis 3, **dadurch gekennzeichnet, dass** das Messobjekt (30) eine Akkuzelle (20) bzw. ein Batterieelement ist, wobei das Thermosensorelement (28) zwischen der Akkuzelle (20) bzw. dem Batterieelement und dessen Umhüllung (32) angeordnet ist.

5. Messanordnung nach wenigstens einem der Ansprüche 1 bis 4, **dadurch gekennzeichnet, dass** die Umhüllung (32) aus Papier ist.

## Claims

1. Measurement arrangement (34) for measuring a temperature of a rechargeable power supply device (10) for an electrical appliance, wherein the power supply device (10) has at least one measurement object (30), **characterized in that** at least one thermal sensor element (28), which is in the form of an NTC resistor (24) or a PTC resistor, without a housing is provided on a flat cable (26) and is arranged in a gap (33) between the measurement object (30) and an outer sheath (32).

2. Measurement arrangement according to Claim 1, **characterized in that** at least two thermal sensor elements (28) are arranged at opposite points and/or at different heights on the measurement object (30).

3. Measurement arrangement according to at least one of Claims 1 and 2, **characterized in that** the rechargeable power supply device (10) is a rechargeable battery pack (12) or battery pack.

4. Measurement arrangement according to at least one of Claims 1 to 3, **characterized in that** the measurement object (30) is a rechargeable battery cell (20) or a battery element, wherein the thermal sensor element (28) is arranged between the rechargeable battery cell (20) or the battery element and the sheath (32) thereof.

5. Measurement arrangement according to at least one of Claims 1 to 4, **characterized in that** the sheath (32) is composed of paper.

## Revendications

1. Système de mesure (34) servant à mesurer une température d'un dispositif rechargeable d'alimentation en énergie (10) prévu pour un appareil électrique, le dispositif d'alimentation en énergie (10) comprenant au moins un objet de mesure (30), **caractérisé en ce qu'**au moins un élément de capteur de température (28) prenant la forme d'une résistance NTC (24) ou d'une résistance PTC est prévu sans carter sur un câble plat (26) et disposé dans un interstice (33) prévu entre l'objet de mesure (30) et une enveloppe (32) extérieure.

2. Système de mesure selon la revendication 1, **caractérisé en ce qu'**au moins deux éléments de capteur de température (28) sont disposés à des points opposés et/ou à différentes hauteurs au niveau de l'objet de mesure (30).

3. Système de mesure selon au moins l'une quelconque des revendications 1 à 2, **caractérisé en ce que** le dispositif rechargeable d'alimentation en énergie (10) est une batterie d'accumulateurs (12) et/ou un paquet de batteries.

4. Système de mesure selon au moins l'une quelconque des revendications 1 à 3, **caractérisé en ce que** l'objet de mesure (30) est une cellule d'accumulateur (20) et/ou un élément de batterie, l'élément de capteur de température (28) étant disposé entre la cellule d'accumulateur (20) et/ou l'élément de batterie et son enveloppe (32).

5. Système de mesure selon au moins l'une quelconque des revendications 1 à 4, **caractérisé en ce que** l'enveloppe (32) est en papier.
